(19) Europäisches Patentamt
European Patent Office
Office européen des brevets

(11) Publication number: 0 265 946 B1

(12) EUROPEAN PATENT SPECIFICATION

(45) Date of publication of patent specification: 24.02.93

(51) Int. Cl.5: B29B 7/06, B29B 7/34, C08L 101/00, C08J 3/00, //B29K23:00,B29K67:00, B29K77:00,B29K69:00, B29K71:00

(21) Application number: 87115904.2

(22) Date of filing: 29.10.87

# (54) Process for producing thermoplastic resin composite.

(30) Priority: 31.10.86 JP 260440/86

(43) Date of publication of application: 04.05.88 Bulletin 88/18

(45) Publication of the grant of the patent: 24.02.93 Bulletin 93/08

(84) Designated Contracting States: DE FR GB IT NL

(56) References cited:
GB-A- 1 597 178
US-A- 4 096 204

(73) Proprietor: MITSUBISHI PETROCHEMICAL CO., LTD.
5-2, 2-chome, Marunouchi
Chiyoda-ku Tokyo 100(JP)

(72) Inventor: Ohno, Kenyu
Mitsubishi Petrochemical Co., Ltd. 1, Toho-cho
Yokkaichi-shi Mie(JP)
Inventor: Arashiro, Yusuke
Mitsubishi Petrochemical Co., Ltd. 1, Toho-cho
Yokkaichi-shi Mie(JP)

(74) Representative: Hansen, Bernd, Dr.rer.nat. et al
Hoffmann, Eitle & Partner Patentanwälte Arabellastrasse 4 Postfach 81 04 20
W-8000 München 81 (DE)

EP 0 265 946 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a process for producing a thermoplastic resin material which is excellent in modulus of elasticity particularly in high temperatures and resistance to chemicals and suitable for use as industrial parts. More particularly, it relates to a process for producing a thermoplastic resin composite having a high-order structure formed by melt-kneading two or more thermoplastic resins while maintaining a viscosity ratio of the resin components within a given range.

A number of proposals have been made with respect to mixtures of two or more thermoplastic resins. In the field of resin mixtures for industrial parts, many of the recent attempts chiefly aim at realization of well-balanced quality, which can never be attained from single resin, by combining a crystalline resin having excellent resistance to chemicals and processability with a non-crystalline resin having excellent modulus of elasticity and dimensional stability. For example, there have been proposed a combination of polypropylene and polyphenylene ether as disclosed in Japanese Patent Publication No. 7069/67 and Japanese Laid-Open Patent Application No. 62246/75, a combination of polyester and polyphenylene ether as disclosed in Japanese Patent Publication Nos. 5220/74 and 21664/76, and a combination of polyamide and polyphenylene ether as disclosed in Japanese Patent Publication Nos. 997/70 and 41663/84.

Any of these conventional resin mixtures comprises at least two resins that are essentially immiscible or hardly miscible with each other, and, in many cases, the various performance properties exhibited by the final product predominantly reflect those of the continuous phase thereof.

For instance, the combination of polypropylene and polyphenylene ether can have either of these components as a continuous phase with the other as a disperse phase by selecting the compounding ratio of these two components. However, the mixture in which polyphenylene ether constitutes a continuous phase and polypropylene constitutes a disperse phase exhibits too poor resistance to chemicals to be practically used, although it has excellent modulus of elasticity in high temperatures. On the other hand, in the case where polypropylene constitutes a continuous phase with the other forming a disperse phase, the mixture has extremely low modulus of elasticity in high temperatures in spite of its excellent resistance to chemicals and processability.

In order to make the resin components compatible with each other, it has also been proposed to add a third component (hereinafter referred to as compatibilizer) to the resin mixture to thereby obtain improved performance properties. This technique produces an effect to reduce a particle size of dispersed particles in the disperse phase or an effect to shift a compounding ratio at which a continuous phase is converted to a disperse phase. However, one cannot find any report suggesting resin compositions whose high-order structure can be controlled properly or methods for such control.

US-A-4 096 204 and GB-A-1 597 178 both describe compositions having a co-continuous network structure comprising (a) a polymer comprising a hydrogenated product of a block polymer comprising monoalkenyl arene polymer blocks A and conjugated diene polymer blocks B and (b) an engineering thermoplastic resin. Both documents describe that it is necessary to match the viscosity of the components to each other during kneading and that the ratio of viscosity is controlled within 0.2 to 4.0 in order to form the co-continuous interlocking network structure.

In both documents the block polymer comprising the monoalkenyl arene polymer block A and the conjugated diene polymer Block B is used. The block polymer is a polymer having elastomeric properties and a high non-newtonial rheologic property which properties are necessary so that the resin particles can be easily extended but only be cut with difficulty during kneading.

If such a block polymer is used it is easy to form the co-continuous network structure by the proper selection of the kneading conditions.

However, because the block polymer is an elastomer and has a very low degree of stiffness, heat resistance and other physical properties which engineering plastics like polyolefines, polyamides or polyesters have, one cannot obtain with said block polymers the properties of engineering plastics.

As a result of extensive investigations, the inventors have confirmed difficulty in bringing out excellent properties naturally possessed by a resin component forming a disperse phase as far as the disperse phase exists in the form of independent particles and directed their attention to a possibility that advantages of both the component forming a continuous phase and the component forming a disperse phase may be taken by converting at least a part of the disperse phase to a continuous phase.

The inventors have conducted various experimentations to establish a method for converting a part of a disperse phase to a continuous phase and, as a result, have found that a ratio of viscosities of two main resin components to be mixed significantly influences a high-order structure of the resulting resin mixture. Further intensive experimentations have been focused on this finding, thus reaching the present invention.

In carrying out the experimentations, crystalline resins and non-crystalline resins as specified in Table 1 of Reference Example hereinafter described were chosen from general-purpose molding grades, and preliminary experimentations were conducted first by melt-kneading various combinations of these resins as shown in Table 2 of Reference Example. As a result, when polyphenylene ether (PPE) having a viscosity of 10 x $10^3$ poise at 280°C and at a shear rate of $10^3$ $sec^{-1}$ was used as a non-crystalline resin, it still formed a disperse phase comprising independent particles even if the compounding ratio of polypropylene (PP) or polyester (PEs) of general-purpose molding grade is reduced from 50% by weight down to 30% by weight, failing to obtain the desired high-order structure.

Then, in Working Examples hereinafter described, various combinations comprising the particular crystalline resin of Table 1 (polypropylene or polyester) and polyphenylene ether having a varied viscosity were melt-kneaded. In these cases, even if a weight ratio of the crystalline resin to the non-crystalline resin is 50:50, the polyphenylene ether disperse phase partly formed a continuous phase as long as a ratio of viscosity of non-crystalline polyphenylene ether to that of crystalline polypropylene or polyester fell within a given range, thus accomplishing improvements on both modulus of elasticity in high temperatures and resistance to chemicals as expected.

The present invention is directed to a process for producing a thermoplastic resin composite comprising melt-kneading a crystalline resin forming a continuous phase and a non-crystalline resin forming a disperse phase, wherein said melt-kneading is carried out under such condition that the ratio of viscosity of the non-crystalline resin to that of the crystalline resin is maintained through the melt-kneading up to 2, thereby forming a disperse phase at least a part of which has a continuous structure, said non-crystalline resin being selected from an acrylic resin, a polycarbonate, a polythioether, a polyimide, an acrylonitrile-butadiene-styrene copolymer, an acrylonitrile styrene copolymer, a polyphenylene ether, a polyetherimide, a polysulfone, a polyethersulfone or a polyamideimide, said crystalline resin being selected from a polyolefin, polyamide or polyester, and wherein the weight ratio of the crystalline resin to the non-crystalline resin is 30 to 95 : 5 to 70.

The crystalline resin which can be used in the present invention is a resin which provides a molded article having a degree of crystallinity of at least 15%, preferably at least 20%, and more preferably at least 25%, as determined by X-ray diffractometry and shows a clear melting point to some extent.

The polyolefins include low-density polyethylene, high-density polyethylene, linear low-density polyethylene, polypropylene, an ethylene/propylene copolymer, polybutene, and a copolymer comprising an olefin in a major proportion and a vinyl monomer, e.g., vinyl acetate. The polyamide includes polymers or copolymers obtained by polycondensation of a diamine and a dibasic acid, self-polycondensation of an amino acid, or polymerization of a lactam. Specific examples of the polyamide resins are polyhexamethylene adipamide (nylon-6,6), polycaprolactam (nylon-6), polyhexamethylene sebacamide (nylon-6,10), and copolymers thereof.

The polyesters include linear polyesters or linear copolyesters consisting mainly of a unit obtained by condensation between an aromatic dicarboxylic acid or a derivative thereof and a diol or a derivative thereof, such as polyethylene terephthalate, polyethylene isophthalate, and polytetramethylene terephthalate.

In the present invention, the polyester to be used preferably has an intrinsic viscosity of at least 0.6, more preferably at least 0.75, and most preferably at least 0.80, as measured in a mixed solvent of phenol and tetrachloroethane (1:1 by volume) at 30°C.

These crystalline resins may be used as a mixture of two or more thereof.

The non-crystalline resin which can be used in the present invention is a resin which provides a molded article having a degree of crystallinity of less than 25%, preferably less than 20%, and more preferably less than 15%, as determined by X-ray diffractometry and does not show a clear melting point.

Preferred non-crystalline resins are polyphenylene ether and polycarbonate.

The polyphenylene ether to be used includes polymers obtained by oxidative coupling polymerization of at least one phenol compound represented by formula:

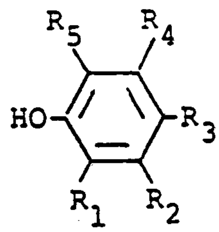

wherein $R_1$, $R_2$, $R_3$, $R_4$ and $R_5$ each represents a hydrogen atom, a halogenated hydrocarbon group, a hydrocarbon group or a substituted hydrocarbon group. Preferred examples of such phenol compounds are 2,6-dimethylphenol, 2,6-diphenylphenol, 2,3,6-trimethylphenol, and 2,6-isopropylphenol. The polyphenylene ether preferably includes poly-2,6-dimethylphenol and a copolymer comprising a major proportion of 2,6-dimethylphenol and a minor proportion of 2,3,6-trimethylphenol or 2,6-diphenylphenol. Those polymers in which a part of the constituting components has undergone modification due to oxidation or by the action of a catalyst seed during polymerization reaction are also suitable.

Modified polyphenylene ethers in which a styrene monomer or a polymer thereof or other vinyl monomer or a polymer thereof is chemically bonded to a polyphenylene ether can also be used.

The polyphenylene ether to be used in this invention preferably has an intrinsic viscosity ranging from 0.32 to 0.55, more preferably from 0.35 to 0.52, and most preferably from 0.40 to 0.50, as measured in chloroform at 30 ° C.

In addition, a mixture consisting of a polyphenylene ether as a major component and a styrene resin compatible therewith. Such a mixture is now widely employed in practice as exemplified by "Nolyl", a trade name produced by General Electric Co.

The polycarbonate to be used is a thermoplastic aromatic polycarbonate resin which may have a branched structure and can be obtained by reacting an aromatic hydroxyl compound, which may contain a small amount of a polyhydroxyl compound, with phosgen or a carboxylic acid diester. The aromatic polycarbonate resin typically includes bis(4-hydroxyphenyl)alkane compounds, and more particularly polycarbonate prepared mainly from bisphenol A; polycarbonate copolymers obtained from at least two aromatic dihydroxyl compounds; and branched polycarbonate obtained by using a small amount of a trihydric phenol compound in combination. These aromatic polycarbonate resins may be used as a mixture of two or more thereof.

These non-crystalline resins may be used as a mixture of two or more thereof.

Specific mode of combining crystalline resins and non-crystalline resins can be selected arbitrarily according to the purpose as long as the thermoplastic resin composite obtained by the kneading process of the present invention is composed of a continuous phase formed by the crystalline resin and a disperse phase formed by the non-crystalline resin.

In order that a continuous phase be formed by a crystalline resin, a compounding ratio of the crystalline resin is increased. The lower limit of the compounding ratio of the crystalline resin is 30% by weight, though varying depending on the kind. More specifically, the crystalline resin is used in a proportion of from 30 to 95% by weight, preferably from 35 to 90% by weight, and more preferably from 40 to 85% by weight, based on the total amount of the crystalline resin and the non-crystalline resin.

The crystalline resin and the non-crystalline resin are kneaded in a molten state.

According to the process of the present invention, a ratio of viscosity of the non-crystalline resin to that of the crystalline resin should be up to 2, preferably from 0.01 to 2, more preferably from 0.1 to 2, and most preferably from 0.5 to 2, throughout the kneading step.

Control of the aforesaid viscosity ratio can be achieved by selection of the resins to be combined and selection of kneading conditions.

Selection of the resins can be made so that the crystalline resin and the non-crystalline resin may have viscosities close to each other under particular melt-kneading conditions. Such selection can generally be made by reference to molecular weights and melt flow rates. In general, a non-crystalline resin having a relatively low viscosity is chosen. The low-viscosity non-crystalline resin includes those resins having low molecular weights and those having incorporated therein a plasticizer or a fluidity improving agent. If in using a hydrolyzable non-crystalline resin, it is possible to reduce its molecular weight by effecting melt-kneading in the presence of water.

Of the kneading conditions, selection of a kneading temperature is important. A thermoplastic resin generally has a decreased viscosity with temperature rise. Since temperature-dependence of viscosity

varies depending on the kind of resins, the aforesaid viscosity ratio of the non-crystalline resin to the crystalline resin can be controlled below 2 by adjusting the temperature for melt-kneading.

Further, a shear rate during the melt-kneading is also one of important factors. Viscosities of thermoplastic resins depend on shear rates during kneading in such a manner that an increase in shear rate tends to result in viscosity reduction. Since the shear rate-dependence of viscosity varies according to the kind of resins, the shear rate should be controlled so that the above-described viscosity ratio may not exceed 2.

The viscosity ratio of the non-crystalline resin to the crystalline resin can be determined by measurement of viscosity of each resin under the same temperature, shear rate and, in some cases, thermal history conditions as those employed in kneading them. Generally, the viscosity of each resin can be measured by means of an Instron capillary rheometer (orifice dimension: 2,54 cm (1 inch) in length; 0,076 cm (0.03 inch) in diameter; L/D = 33) at measurement temperature and shear rate fixed to those employed for kneading both resins. The viscosity ratio of the mixture of two or more non-crystalline resins to the mixture of two or more crystalline resins can be determined in the same manner as above except for measurement of viscosity of each mixture is made in place of measurement of viscosity of each resin.

Melt-kneading of the crystalline resin and non-crystalline resin can be carried out by any of methods commonly employed for thermoplastic resins. For example, the components in the form of powder or granule are uniformly mixed by means of a Henschel mixer, a ribbon blender, a twin-shell blender, etc., and the mixture is then kneaded in a single or multiple screw extruder, a roll, a Banbury mixer, etc., preferably in the single or multiple screw extruder or the Banbury mixer.

In the present invention, it is necessary to control the viscosity ratio below the above-mentioned level all through the kneading step, and desirably throughout the subsequent molding step. If the resin mixture is deteriorated due to exposure to an extremely high temperature or if it undergoes hydrolysis during melt-kneading or molding, the viscosity of the crystalline resin is liable to extremely decrease, which would result in a viscosity ratio exceeding 2. Such being the case, the desired high-order structure of the resulting resin composite would be lost. Therefore, in the case of using a crystalline resin subject to deterioration, it is required to take any countermeasure, such as increase of the amount of additives for preventing such deterioration in agreement with the conditions on use; sealing of the atmosphere to which the resin mixture is exposed during melt-kneading or molding with an inert gas, e.g., nitrogen; through preliminary drying of resins that are hydrolyzable, e.g., polyesters; or the like technique. On the contrary, in a combination of, for example, polypropylene and polycarbonate, it is also effective to intentionally induce molecular weight reduction of the polycarbonate at the time of melt-kneading without preliminary drying so that the polycarbonate/polypropylene viscosity ratio may be controlled below 2.

In addition, for the purpose of attaining the desired viscosity ratio, the viscosity of the non-crystalline resin can be decreased by, for example, adding polystyrene or a plasticizer to polyphenylene ether. Alternatively, the viscosity of the crystalline resin can be increased by inducing crosslinking to a slight degree during melt-kneading. These and other techniques may be chosen arbitrarily as long as the resulting viscosity ratio may be up to 2.

If desired, the resin composite according to the present invention may further contain resinous components other than the above-described thermoplastic resins, elastomers, pigments, organic or inorganic fillers and other additives unless these additional components impair the performance properties of the composite as purposed in the present invention.

The thus-obtained thermoplastic resin composite comprises a crystalline resin matrix in which a non-crystalline resin particles are dispersed to form a bridging structure or a network structure.

## REFERENCE EXAMPLE

Preliminary melt-kneading experimentations were carried out using materials shown in Table 1. In Table 1 and the following Examples, the abbreviations have the following meanings.

PP: Polypropylene
PEs: Polyester
PPE: Polyphenylene ether
GMA: Glycidyl methacrylate
PA: Polyamide
PC: Polycarbonate

TABLE 1

| Kind | Viscosity** (poise) | Remarks |
|---|---|---|
| Crystalline Resin: | | |
| PP<br>PEs* | $1 \times 10^3$<br>$6 \times 10^3$ | "MA8" made by Mitsubishi Petrochemical Co., Ltd.<br>"RT-560", polyethylene terephthalate made by Nippon Unipet Co., Ltd. |
| Non-Crystalline Resin: | | |
| PPE | $10 \times 10^3$ | Poly-2,6-dimethyl-1,4-phenylene ether made by Mitsubishi Petrochemical Co., Ltd., made on an experimental basis |
| Compatibilizer: | | |
| (a)<br>(b)<br>(c) | --<br>--<br>-- | PP-GMA graft polymer, GMA content: 2 wt%, made by Mitsubishi Petrochemical Co., Ltd. on an experimental basis<br>"Dylark 232", styrenemaleic anhydride copolymer (maleic anhydride content: 8 wt%) made by ARCO Polymer Co., Ltd.<br>Styrene-GMA copolymer (GMA content: 5 wt%) made by Mitsubishi Petrochemical Co., Ltd. on an experimental basis |

Note:
*: PEs having been preliminarily dried at 105 °C for 8 hours was used.
**: Measured by means of an Instron capillary rheometer (orifice dimension: 2,54 cm (1 inch) in length, 0,076 cm (0.03 inch) in diameter, L/D = 33) at 280 °C and at a shear rate of $10^3$ $sec^{-1}$ 1 poise corresponds to 0.1 Pa x s (hereinafter the same).

Compositions used in the preliminary experimentations are shown in Table 2 below.

TABLE 2

| Component | Run No. | | | | |
|---|---|---|---|---|---|
| Resin*: | 1 | 2 | 3 | 4 | 5 |
| PP | 50 | 40 | 30 | | |
| PEs | | | | 50 | 30 |
| PPE | 50 | 60 | 70 | 50 | 70 |
| Compatibilizer**: | | | | | |
| (a) | 15 | 15 | 15 | | |
| (b) | 15 | 15 | 15 | | |
| (c) | | | | 20 | 20 |

Note:
*: Percent by weight
**: Part by weight per 100 parts by weight of the total amount of the resin components

The present invention will now be illustrated in greater detail by way of Examples and Comparative Examples, but it should be understood that the present invention is not deemed to be limited thereto. In these examples all the percents and parts are by weight unless otherwise indicated.

Resin materials used in Examples and Comparative Examples are tabulated below.

TABLE 3

| Kind | Viscosity (poise) | Remarks |
|---|---|---|
| Crystalline Resin: | | |
| PP | $1 \times 10^3$ | The same as in Table 1 |
| PEs | $6 \times 10^3$ | The same as in Table 1 |
| PA | $1.1 \times 10^3$ | "PA6 KR4411" made by BASF |
| Non-Crystalline Resin: | | |
| PC* | $0.7 \times 10^3$ | "H4000" made by Mitsubishi Gas Chemical Industries Ltd. |
| | $7.5 \times 10^3$ | "S2000" made by Mitsubishi Gas Chemical Industries Ltd. |
| PPE | $0.4 \times 10^3$ | The same as in Table 1 |
| | $0.9 \times 10^3$ | The same as in Table 1 |
| | $2.0 \times 10^3$ | The same as in Table 1 |
| | $10 \times 10^3$ | The same as in Table 1 |

Note:
*: PC having been preliminarily dried at 105 °C for 8 hours was used.

EXAMPLES 1 AND 2 AND COMPARATIVE EXAMPLE 1

About 800 g of a composition comprising 70% of PPE having a melt viscosity of $10 \times 10^3$, $2 \times 10^3$ or $0.9 \times 10^3$ and 30% of PP (melt viscosity: $1 \times 10^3$) as resin components and 15 parts of Compatibilizer (a) and 15 parts of Compatibilizer (b) both per 100 parts of the total amount of the resin components was preliminarily kneaded in a multiple screw kneader "EK-2X-1000" (manufactured by Tosoku Seimitsu Kogyo K.K.) at 280 °C and 20 rpm for 2 minutes. The rotary speed was raised to 100 rpm, and kneading was further continued for an additional 5 minutes. Prior to the kneading, the pressure of the atmosphere in the kneader was diminished to 10 Torr or less, and the atmosphere was then completely displaced with nitrogen unless otherwise specified.

After completion of the kneading, the compound was ground to particles and molded into specimens for determination of dispersion state, flexural modulus of elasticity and resistance to chemicals by the use of an injection molding machine "M40A-SJ" (manufactured by Meiki Seisakusho),.

Physical properties of the resulting samples were determined according to the following methods.

1) Melt Viscosity:

As defined above.

2) Dispersion State:

A part of a specimen was cut out, and the cut surface was observed by a scanning type electron microscope "HHS-2R" (manufactured by Hitachi, Ltd.).

3) Flexural Modulus of Elasticity:

Measured at 80 °C by the use of an Instron tester in accordance with ISO R178-1974 Procedure 12 (JIS K7203).

4) Resistance to Chemicals:

A specimen (2 mm in thickness) was fixed to a Bergen's 1/4 elliptical jig [cf. S.P.E. Journal, 667 (1962)] and immersed in a mixed solvent of heptane and toluene (9:1 by volume) for 3 minutes. Resistance to chemicals was evaluated by determining a minimum strain at the site of stress-crazing.

The results of these determinations are shown in Table 4.

TABLE 4

| Example No. | Resin Composition PP (%) | Resin Composition PPE (%) | Melt Viscosity of Resin PP (poise) | Melt Viscosity of Resin PPE (poise) | Dispersion State of PPE Disperse Phase | Flexural Modulus of Elasticity at 80°C ($kg/cm^2$)+ | Resistance to Chemicals |
|---|---|---|---|---|---|---|---|
| 1 | 30 | 70 | $1 \times 10^3$ | $2 \times 10^3$ | Partly converted to a continuous phase | 12,400 | >1.2 |
| 2 | 30 | 70 | $1 \times 10^3$ | $0.9 \times 10^3$ | do. | 15,200 | 0.7 |
| Comparative Example 1 | 30 | 70 | $1 \times 10^3$ | $10 \times 10^3$ | Independent particles | 6,100 | >1.2 |

+ ($kg/cm^2$ corresponds to 0.098 $N/mm^2$; hereinafter the same).

It can be seen from Table 4 that if the proportion of PPE is 70% based on the combination of resin components and the PPE/PP viscosity ratio is up to 2, a part of PPE constituting a disperse phase can be converted to a continuous phase to markedly improve modulus of elasticity in a high temperature without

causing serious reduction in resistance to chemicals.

EXAMPLES 3 AND 4 AND COMPARATIVE EXAMPLE 2

The same experimentations as in the foregoing examples were repeated, except for changing the composition ratio of PPE to PP to 60:40. The results obtained are shown in Table 5.

TABLE 5

| Example No. | Resin Composition PP (%) | Resin Composition PPE (%) | Melt Viscosity of Resin PP (poise) | Melt Viscosity of Resin PPE (poise) | Dispersion State of PPE Disperse Phase | Flexural Modulus of Elasticity at 80°C ($kg/cm^2$) | Resistance to Chemicals |
|---|---|---|---|---|---|---|---|
| 3 | 40 | 60 | $1 \times 10^3$ | $2 \times 10^3$ | Partly converted to a continuous phase | 10,900 | >1.2 |
| 4 | 40 | 60 | $1 \times 10^3$ | $0.9 \times 10^3$ | do. | 14,000 | >1.2 |
| Comparative Example 2 | 40 | 60 | $1 \times 10^3$ | $10 \times 10^3$ | Independent particles | 5,700 | >1.2 |

As can be seen from Table 5, the same tendency as observed in the foregoing examples was noted when the proportion of PPE was 60%.

EXAMPLE 5 AND COMPARATIVE EXAMPLES 3 AND 4

The same experimentations as in the foregoing examples were repeated, except for changing the composition ratio of PPE to PP to 50:50. The results obtained are shown in Table 6.

TABLE 6

| Example No. | Resin Composition | | Melt Viscosity of Resin | | Dispersion State of PPE Disperse Phase | Flexural Modulus of Elasticity at 80°C ($kg/cm^2$) | Resistance to Chemicals |
|---|---|---|---|---|---|---|---|
| | PP (%) | PPE (%) | PP (poise) | PPE (poise) | | | |
| 5 | 50 | 50 | $1 \times 10^3$ | $0.9 \times 10^3$ | Partly converted to a continuous phase | 11,600 | >1.2 |
| Comparative Example 3 | 50 | 50 | $1 \times 10^3$ | $10 \times 10^3$ | Independent particles | 5,700 | >1.2 |
| Comparative Example 4 | 50 | 50 | $1 \times 10^3$ | $2 \times 10^3$ | do. | 6,500 | >1.2 |

In Comparative Example 4, in spite that the PPE/PP viscosity ratio was less than 2, a continuous disperse phase could not be formed. Hence, each of PPE and PP was separately kneaded in the same kneader "EK-2X-1000" and then determined for the respective melt viscosity. As a result, it was found that PPE and PP after the kneading had a melt viscosity of 2 x $10^3$ and 0.6 x $10^3$, respectively. Therefore, the PPE/PP viscosity ratio during the kneading in Comparative Example 4 was proved to be more than 2.

EXAMPLE 6 AND COMPARATIVE EXAMPLE 5

The same experimentations as in the foregoing examples were repeated, except that the composition comprised 60% of PPE having a melt viscosity of 10 x $10^3$ or 2 x $10^3$ and 40% of preliminarily dried PEs (melt viscosity after preliminary drying: 6 x $10^3$) as resin components and 20 parts of Compatibilizer (c) specified in Table 1 per 100 parts of the total amount of the resin components. The results obtained are shown in Table 7.

TABLE 7

| Example No. | Resin Composition PEs (%) | Resin Composition PPE (%) | Melt Viscosity of Resin PEs (poise) | Melt Viscosity of Resin PPE (poise) | Dispersion State of PPE Disperse Phase | Flexural Modulus of Elasticity at 80°C ($kg/cm^2$) | Resistance to Chemicals |
|---|---|---|---|---|---|---|---|
| 6 | 40 | 60 | $6 \times 10^3$ | $2 \times 10^3$ | Partly converted to a continuous phase | 11,800 | >1.2 |
| Comparative Example 5 | 40 | 60 | $6 \times 10^3$ | $10 \times 10^3$ | Independent particles | 6,200 | >1.2 |

In Comparative Example 5, in spite that the PPE/PEs viscosity ratio was up to 2, a continuous disperse phase could not be formed. Hence, each of PPE and PEs was separately kneaded in the same kneader "EK-2X-1000" and then determined for the respective melt viscosity. As a result, PPE was found to have a melt viscosity of $9 \times 10^3$, indicating a small reduction from that before kneading, while PEs was found to have a melt viscosity of $3 \times 10^3$. Therefore, the PPE/PEs viscosity ratio during the kneading in Comparative

Example 5 was proved to be 3.

EXAMPLE 7 AND COMPARATIVE EXAMPLE 6

The same experimentations as in the foregoing examples were repeated, except that the atmosphere of the kneader was not displaced with nitrogen, 60% of PPE having a melt viscosity of 0.9 x $10^3$ or 0.4 x $10^3$ and 40% of PEs not having been subjected to preliminary drying (water content: 0.26% as measured by a Karl Fischer's method) were used as resin components and 20 parts of Compatibilizer (c) specified in Table 1 was used per 100 parts of the total amount of the resin components. The melt viscosity of the PEs not having been preliminarily dried was unmeasurable due to foaming, and that of the PEs after preliminary drying was 6 x $10^3$ poise. The results obtained are shown in Table 8.

TABLE 8

| Example No. | Resin Composition | | Melt Viscosity of Resin | | Dispersion State of PPE Disperse Phase | Flexural Modulus of Elasticity at 80°C | Resistance to Chemicals |
|---|---|---|---|---|---|---|---|
| | PEs (%) | PPE (%) | PEs (poise) | PPE (poise) | | ($kg/cm^2$) | |
| 7 | 40 | 60 | -- | $0.4 \times 10^3$ | Partly converted to a continuous phase | 12,000 | >1.2 |
| Comparative Example 6 | 40 | 60 | -- | $0.9 \times 10^3$ | Independent particles | 5,900 | >1.2 |

In order to examine the change in melt viscosity of the resin components used during the melt-kneading, each of PPE and PEs was separately kneaded in the same kneader "EK-2X-1000" with its atmosphere not having been displaced with nitrogen and then determined for the respective melt viscosity. As a result, the melt viscosity of PPE (original melt viscosity: $0.4 \times 10^3$ or $0.9 \times 10^3$) remained unchanged, while that of PEs was reduced to $0.2 \times 10^3$. Therefore, the PPE/PEs viscosity ratio in Example 7 and

Comparative Example 6 was proved to be 2 and 4.5, respectively.

EXAMPLE 8 AND COMPARATIVE EXAMPLE 7

The same experimentations were repeated as in the foregoing examples, except that the composition comprised 50% of PPE having a melt viscosity of 0.4 x $10^3$ or 2 x $10^3$ and 50% of PA as resin components and 0.5 part of commercially available maleic anhydride of reagent grade as a compatibilizer and 15 parts of a commercially available styrene-butadiene block copolymer (styrene content: 40%) as an impact resistance-improving agent both per 100 parts by weight of the total amount of the resin components. The results obtained are shown in Table 9.

TABLE 9

| Example No. | Resin Composition PA (%) | Resin Composition PPE (%) | Melt Viscosity of Resin PA (poise) | Melt Viscosity of Resin PPE (poise) | Dispersion State of PPE Disperse Phase | Flexural Modulus of Elasticity at 80°C ($kg/cm^2$) | Resistance to Chemicals |
|---|---|---|---|---|---|---|---|
| 8 | 50 | 50 | $1.1 \times 10^3$ | $0.4 \times 10^3$ | Partly converted to a continuous phase | 11,600 | >1.2 |
| Comparative Example 7 | 50 | 50 | $1.1 \times 10^3$ | $2 \times 10^3$ | Independent particles | 8,800 | >1.2 |

In Comparative Example 7, in spite that the PPE/PA viscosity ratio was up to 2, a dispersed phase partly having a continuous phase could not be formed. Hence, each of PPE and PA was separately kneaded in the same kneader "EK-2X-1000" and then determined for the respective melt viscosity. As a result, it was found that PPE and PA after the kneading had a melt viscosity of $2 \times 10^3$ and $0.7 \times 10^3$, respectively, indicating that the PPE/PA viscosity ratio during kneading in Comparative Example 7 was about 3.

EXAMPLE 9 AND COMPARATIVE EXAMPLE 8

The same experimentations as in the foregoing examples were repeated, except that the composition comprised 60% of PC having a melt viscosity of 0.7 x $10^3$ or 7.5 x $10^3$ and 40% of PEs as resin components and 10 parts of a phenoxy resin "E1255" (produced by Yuka Shell Epoxy K.K.) as a compatibilizer per 100 parts of the total amount of the resin components. The results obtained are shown in Table 10.

TABLE 10

| Example No. | Resin Composition PEs (%) | Resin Composition PC (%) | Melt Viscosity of Resin PEs (poise) | Melt Viscosity of Resin PC (poise) | Dispersion State of PC Disperse Phase | Flexural Modulus of Elasticity at 80°C ($kg/cm^2$) | Resistance to Chemicals |
|---|---|---|---|---|---|---|---|
| 9 | 40 | 60 | $6 \times 10^3$ | $0.7 \times 10^3$ | Partly converted to a continuous phase | 18,000 | >1.2 |
| Comparative Example 8 | 40 | 60 | $6 \times 10^3$ | $7.5 \times 10^3$ | Independent particles | 15,000 | >1.2 |

As can be seen from Table 10, although the PC/PEs viscosity ratio in Comparative Example 8 was up to 2, a continuous disperse phase could not be formed. Hence, each of PC and PEs was separately kneaded in the same kneader "EX-2X-1000" and then determined for the respective melt viscosity. As a result, PC and PEs after the kneading were found to have a melt viscosity of $6.5 \times 10^3$ and $3 \times 10^3$, respectively, indicating that the PC/PEs viscosity ratio was about 2.2.

## Claims

1. A process for producing a thermoplastic resin composite comprising melt-kneading a crystalline resin forming a continuous phase and a non-crystalline resin forming a disperse phase, wherein said melt-kneading is carried out under such condition that the ratio of viscosity of the non-crystalline resin to that of the crystalline resin is maintained through the melt-kneading up to 2, thereby forming a disperse phase at least a part of which has a continuous structure, said non-crystalline resin being selected from an acrylic resin, a polycarbonate, a polythioether, a polyimide, an acrylonitrile-butadiene-styrene copolymer, an acrylonitrile styrene copolymer, a polyphenylene ether, a polyetherimide, a polysulfone, a polyethersulfone or a polyamideimide, said crystalline resin being selected from a polyolefin, polyamide or polyester, and wherein the weight ratio of the crystalline resin to the non-crystalline resin is 30 to 95 : 5 to 70.

2. A process as claimed in claim 1, wherein said ratio of viscosity is from 0.1 to 2.

3. A process as claimed in claim 1, wherein said ratio of viscosity is from 0.5 to 2.

4. A process as claimed in claim 1, wherein the weight ratio of the crystalline resin to the non-crystalline resin is 35 to 90 : 10 to 65.

5. A process as claimed in claim 1, wherein the melt-kneading is carried out by means of a single or multiple screw extruder or a Banbury mixer.

## Patentansprüche

1. Verfahren zur Herstellung eines thermoplastischen Harzverbunds, umfassend das Schmelzkneten eines kristallinen Harzes, das eine kontinuierliche Phase bildet, und eines nichtkristallinen Harzes, das eine dispergierte Phase bildet, worin das Schmelzkneten unter solchen Bedingungen durchgeführt wird, daß ein Viskositätsverhältnis des nichtkristallinen Harzes zum kristallinen Harz während des Schmelzknetens bis zu 2 aufrechterhalten wird, wodurch eine dispergierte Phase gebildet wird, von der mindestens ein Teil eine kontinuierliche Struktur hat, wobei das nichtkristalline Harz ausgewählt ist aus einem Acrylharz, einem Polycarbonat, einem Polythioether, einem Polyimid, einem Acrylnitrilbutadienstyrol-Copolymer, einem Acrylnitrilstyrol-Copolymer, einem Polyphenylenether, einem Polyetherimid, einem Polysulfon, einem Polyethersulfon oder einem Polyamidimid, das kristalline Harz ausgewählt ist aus einem Polyolefin, einem Polyamid oder Polyester, und worin das Gewichtsverhältnis des kristallinen Harzes zum nichtkristallinen Harz 30 bis 95 : 5 bis 70 ist.

2. Verfahren nach Anspruch 1, worin das Viskositätsverhältnis von 0,1 bis 2 ist.

3. Verfahren nach Anspruch 1, worin das Viskositätsverhältnis von 0,5 bis 2 ist.

4. Verfahren nach Anspruch 1, worin das Gewichtsverhältnis des kristallinen Harzes zum nichtkristallinen Harz 35 bis 90 : 10 bis 65 ist.

5. Verfahren nach Anspruch 1, worin das Schmelzkneten mittels eines Einzel- oder Mehrfachschraubenextruders oder eines Banbury-Mixers durchgeführt wird.

## Revendications

1. Procédé pour produire un composite de résines thermoplastiques, comprenant le malaxage au fondu d'une résine cristalline formant une phase continue et d'une résine non cristalline formant une phase dispersée, procédé dans lequel le malaxage au fondu est effectué dans des conditions telles que le rapport entre la viscosité de la résine non cristalline et la viscosité de la résine cristalline est maintenu, pendant tout le malaxage au fondu, à une valeur allant jusqu'à 2, de sorte que l'on forme une phase dispersée dont une partie au moins a une structure continue, ladite résine non cristalline étant choisie parmi une résine acrylique, un polycarbonate, un polythioéther, un polyimide, un copolymère d'acrylonitrilebutadiène-styrène, un copolymère d'acrylonitrile-styrène, un poly(éther de phénylène), un polyétherimide, une polysulfone, une polyéthersulfone ou un polyamide imide, ladite résine cristalline

étant choisie parmi une polyoléfine, un polyamide ou un polyester, et le rapport pondéral entre la résine cristalline et la résine non cristalline valant de 30 à 95:5 à 70.

2. Procédé tel que revendiqué à la revendication 1, dans lequel ledit rapport entre les viscosités se situe entre 0,1 et 2.

3. Procédé tel que revendiqué à la revendication 1, dans lequel ledit rapport entre les viscosités se situe entre 0,5 et 2.

4. Procédé tel que revendiqué à la revendication 1, dans lequel le rapport pondéral entre la résine cristalline et la résine non cristalline vaut de 35 à 90:10 à 65.

5. Procédé tel que revendiqué à la revendication 1, dans lequel le malaxage au fondu est réalisé à l'aide d'une extrudeuse à une seule vis ou à vis multiples ou à l'aide d'un mélangeur Banbury.